(19) Europäisches Patentamt
European Patent Office
Office européen des brevets

(11) **EP 2 746 722 B1**

(12) **FASCICULE DE BREVET EUROPEEN**

(45) Date de publication et mention
de la délivrance du brevet:
**08.08.2018 Bulletin 2018/32**

(51) Int Cl.:
*G01C 9/06* [(2006.01)]  *G01C 21/10* [(2006.01)]
*G06F 3/046* [(2006.01)]  *G06F 3/0346* [(2013.01)]
*G01B 21/24* [(2006.01)]  *E04G 21/22* [(2006.01)]

(21) Numéro de dépôt: **13198245.6**

(22) Date de dépôt: **18.12.2013**

(54) **Procédé de détermination de l'inclinaison d'un objet**

Bestimmungsverfahren der Neigung eines Objekts

Method for determining the inclination of an object

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2012 FR 1262322**

(43) Date de publication de la demande:
**25.06.2014 Bulletin 2014/26**

(73) Titulaire: **Commissariat à l'Énergie Atomique
et aux Énergies Alternatives
75015 Paris (FR)**

(72) Inventeurs:
• **Carmona, Mickaël
38570 Tencin (FR)**
• **Jouanet, Laurent
38880 Autrans (FR)**
• **Sprynski, Nathalie
38830 Saint Pierre D'allevard (FR)**

(74) Mandataire: **GIE Innovation Competence Group
310, avenue Berthelot
69372 Lyon Cedex 08 (FR)**

(56) Documents cités:
**EP-A1- 2 077 432     EP-A1- 2 492 417
EP-A2- 1 115 350     WO-A1-2007/062496**

**Description**

L'invention concerne un procédé de détermination de l'inclinaison d'un objet. L'invention concerne également un objet comportant un dispositif pour déterminer l'inclinaison de cet objet.

Il est connu de déterminer l'inclinaison d'un objet à partir de capteurs de mouvement placés sur cet objet. Par inclinaison, on entend l'angle que forme un axe de l'objet par rapport à la direction du champ de gravité. Ces capteurs sont généralement de nature différente, tels que des accéléromètres, des magnétomètres et des gyroscopes. Dans certaines applications, le recours simultané à ces capteurs de nature différente n'est pas souhaitable. Par exemple, un gyroscope ne fournit pas une information suffisante lorsque l'objet présente un mouvement de faible amplitude. D'autre part, un magnétomètre présente une sensibilité importante à l'environnement et apporte une source supplémentaire de bruit. En outre, le traitement de données provenant simultanément de capteurs de nature différente est plus complexe à mettre en oeuvre que lorsqu'il n'y a qu'un seul type de capteurs.

WO 2007/062496 A1 et EP 2 492 417 A1 divulguent des méthodes pour déterminer l'inclinaison d'un objet muni d'accéléromètres et magnétomètres.

On connaît ainsi des méthodes pour déterminer l'inclinaison d'un objet muni d'accéléromètres mais dépourvu de magnétomètres et de gyroscopes. Une telle méthode est décrite dans l'article de K. Parsa et al., « Attitude calibration of an accelerometer array », « Proceedings of the 2002 IEEE International Conférence on Robotics & Automation », p. 129-134, mai 2002. Cette méthode nécessite cependant la connaissance de la position absolue des accéléromètres par rapport à un repère de référence, ce qui peut présenter un inconvénient dans certaines applications, notamment lorsque la position absolue (dans le repère de référence) de l'objet n'est pas connue.

EP 1 115 350 A2 et EP 2 077 432 A1 divulguent des méthodes pour déterminer l'inclinaison d'un objet muni d'accéléromètres dans le domaine de la technologie médicale et véhiculaire. Il existe donc un besoin pour un procédé de détermination de l'inclinaison d'un objet, par rapport à une direction verticale, à l'aide d'un réseau d'accéléromètres placés sur cet objet, la position absolue sur cet objet de ces accéléromètres n'étant pas connue, ce procédé présentant une robustesse et une fiabilité accrue.

L'invention porte ainsi sur un procédé de détermination de l'inclinaison d'un objet dans un repère de référence fixe par rapport à la direction du champ de gravité terrestre, comportant toutes les caractéristiques de la revendication 1, parmi lesquelles se trouvent comportant :

- la fourniture de plusieurs accéléromètres reliés de façon rigide par l'objet et répartis sur un cercle, chacun de ces accéléromètres étant apte à mesurer une accélération selon au moins une direction de mesure, les directions de mesure respectives d'au moins deux desdits accéléromètres étant non colinéaires, au moins une des directions de mesure de chacun desdits accéléromètres étant définie par le rayon reliant cet accéléromètre au centre du cercle ;
- la mesure, par lesdits accéléromètres, des composantes du champ de gravité terrestre le long desdites directions de mesure, cette mesure fournissant, pour chacune desdites directions, une valeur de mesure, notée $m_j$ pour une direction de mesure d'indice i ;
- la résolution de l'équation matricielle suivante pour déterminer l'inclinaison $\Phi$ de l'objet par rapport au repère de référence :

$$M = A \begin{bmatrix} \cos(\phi) \\ -\sin(\phi)\sin(\eta) \\ -\sin(\phi)\cos(\eta) \end{bmatrix}$$

avec M le vecteur dont la i-ième composante est définie par la mesure mj, A une matrice définie par les directions de mesure des accéléromètres dans un référentiel solidaire de l'objet, et $\eta$ un angle de rotation de ce référentiel solidaire par rapport au référentiel fixe, lesdits accéléromètres présentant un bruit statistique de mesure gaussien et centré, la résolution comprenant la minimisation d'un critère $L(\Phi, \eta)$ défini par l'équation suivante :

$$L(\theta, \eta) = \left(\sin(\phi)f(\eta) - M\right)^T \times \underline{\underline{\Gamma}}^{-1} \times \left(\sin(\phi)f(\eta) - M\right)$$

avec $\underline{f}(\eta)$ un vecteur dont la i-ième composante est égale à $-\sin(\alpha_i+\eta)$, avec $\alpha_i$ l'angle de positionnement, autour d'un axe normal audit cercle et passant par son centre, de l'accéléromètre d'incice i par rapport à un desdits accéléromètres pris comme référence, et avec $\underline{\underline{\Gamma}}$ une matrice de covariance correspondant aux bruits statistiques de mesure des accéléromètres pour lesdites directions de mesure.

Lesdits accéléromètres sont au moins au nombre de trois et ($A_1$, ... $A_N$) sont répartis de façon uniforme sur ledit cercle.

Selon une autre variante, lesdits accéléromètres sont au moins au nombre de quatre.

Selon encore une variante, les bruits statistiques des accéléromètres sont statistiquement indépendants, et la matrice de covariance $\underline{\Gamma}$ est une matrice diagonale et définie positive dont le i-ième coefficient est égal à la variance $\sigma_i^2$ pour la i-ième direction de mesure.

Selon une autre variante, lesdites étapes de mesure sont effectuées sur un objet présentant une accélération propre par rapport au repère de référence au moins dix fois inférieure à l'amplitude du champ de gravité g, de préférence au moins vingt fois inférieure à l'amplitude du champ de gravité g.

Selon encore une autre variante, le procédé porte sur le calcul de la courbure d'une structure et comprend :

- la fourniture de premiers accéléromètres reliés par un premier objet rigide ;
- la fourniture de seconds accéléromètres reliés par un second objet rigide fixé à un deuxième emplacement de la structure ;
- la détermination des inclinaisons respectives des premier et deuxième objets par un procédé tel que décrit ci-dessus ;
- le calcul de la courbure de la structure à partir des première et deuxième inclinaisons déterminées.

L'invention porte en outre sur un objet instrumenté comportant un dispositif pour déterminer automatiquement l'inclinaison de cet objet dans un repère de référence fixe par rapport à la direction du champ de gravité terrestre, et comportant toutes les caractéristiques de la revendication 7, parmi lesquelles se trouvent :

- plusieurs accéléromètres reliés de façon rigide par l'objet et répartis sur un cercle, chacun de ces accéléromètres étant apte à mesurer une composante du champ de gravité terrestre selon au moins une direction de mesure pour fournir une valeur de mesure notée $m_j$ pour une direction de mesure d'indice i, les directions de mesure respectives d'au moins deux desdits accéléromètres étant non colinéaires, au moins une des directions de mesure de chacun desdits accéléromètres étant définie par le rayon reliant cet accéléromètre au centre du cercle ;
- un dispositif de calcul programmé pour déterminer l'inclinaison $\Phi$ de l'objet par rapport au repère de référence :

$$M = A \begin{bmatrix} \cos(\phi) \\ -\sin(\phi)\sin(\eta) \\ -\sin(\phi)\cos(\eta) \end{bmatrix}$$

avec M le vecteur dont la i-ième composante est définie par la mesure $m_j$, A une matrice définie par les directions de mesure des accéléromètres dans un référentiel solidaire de l'objet, et $\eta$ un angle de rotation de ce référentiel solidaire par rapport au référentiel fixe, lesdits accéléromètres présentant un bruit statistique de mesure gaussien et centré, ledit dispositif de calcul étant programmé pour résoudre ladite équation matricielle par la minimisation d'un critère $L(\Phi, \eta)$ défini par l'équation suivante :

$$L(\theta, \eta) = \left(\sin(\phi)f(\eta) - M\right)^T \times \underline{\Gamma}^{-1} \times \left(\sin(\phi)f(\eta) - M\right)$$

avec $f(\eta)$ un vecteur dont la i-ième composante est égale à $-\sin(\alpha i + \eta)$, avec $\alpha i$ l'angle de positionnement, autour d'un axe normal audit cercle et passant par son centre, de l'accéléromètre d'incice i par rapport à un desdits accéléromètres pris comme référence, et avec $\Gamma$ une matrice de covariance correspondant aux bruits statistiques de mesure des accéléromètres pour lesdites directions de mesure.

D'autres caractéristiques et avantages de l'invention ressortiront clairement de la description qui en est faite ci-après, à titre indicatif et nullement limitatif, en référence aux dessins annexés, dans lesquels :

- la figure 1 illustre schématiquement un objet comportant un dispositif de mesure de l'inclinaison de cet objet, cet objet présentant une inclinaison nulle par rapport à une direction verticale ;
- la figure 2 illustre schématiquement un dispositif de calcul de l'inclinaison de l'objet de la figure 1 ;
- la figure 3 est un organigramme d'un procédé d'utilisation du dispositif de la figure 1 ;
- la figure 4 illustre schématiquement l'objet de la figure 1 dans une position inclinée par rapport à la direction verticale.
- la figure 5 illustre schématiquement, selon une vue de profil, une portion d'une structure comportant l'objet de la figure 1.

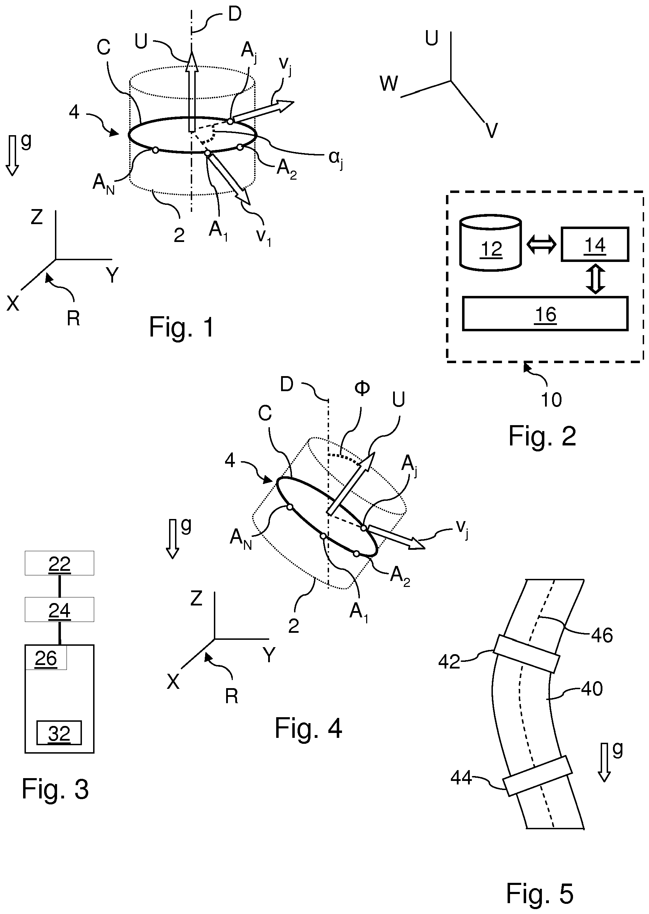

La figure 1 représente un objet 2 instrumenté, comportant un dispositif 4 configuré pour déterminer l'inclinaison de l'objet 2 par rapport à une direction de référence D. La direction de référence D est la direction selon laquelle s'applique la gravité à laquelle est soumis l'objet 2. Par exemple, l'objet 2 est soumis à la gravité terrestre ; la direction de référence D est la direction du champ de gravité terrestre, représentée par le vecteur g et définissant une direction verticale.

L'objet 2 est dans l'exemple un solide considéré comme indéformable, c'est-à-dire que la distance séparant entre eux des points quelconques de l'objet 2 ne varie pas lorsque cet objet 2 subit un déplacement. Cet objet 2 est ici de forme cylindrique. On définit ici un repère orthonormé défini par les vecteurs U, V, W et solidaire de l'objet 2, U étant le vecteur de la direction de l'axe du cylindre (dans un cas général, on peut associer de façon arbitraire un repère orthonormé, à un objet pas nécessairement cylindrique). Pour simplifier, cet objet 2 est dessiné en pointillés sur la figure 1 (et sur la figure 4). L'objet 2 peut par exemple être réalisé sous forme de collier destiné à être fixé sur un autre objet

Dans cette description, pour caractériser l'inclinaison de l'objet 2, on définit un repère orthonormé R, dit « repère de référence ». Ce repère R est composé de trois directions orthonormales X, Y et Z. La direction verticale, notée Z, est parallèle à la direction D du champ de gravité g dans l'exemple. Le champ de gravité g sera exprimé par le vecteur [0 ; 0 ; 1] dans le repère R. L'inclinaison de l'objet 2 est ici définie comme étant l'angle formé entre la direction D et l'axe U suivant lequel s'étend l'objet 2. Sur la figure 1, l'objet 2 est illustré avec une inclinaison nulle, les directions D et U sont donc parallèles.

On va dans un premier temps étudier un cas général de mise en oeuvre de l'invention.

Les vecteurs unitaires du repère orthonormé solidaire de l'objet 2 peuvent être définis de la façon suivante dans le repère R. :

$$U \quad = \quad \begin{bmatrix} \sin(\phi)\cos(\theta) \\ \sin(\phi)\sin(\theta) \\ \cos(\phi) \end{bmatrix}$$

$$V \quad = \quad \begin{bmatrix} \cos(\eta)\sin(\theta) + \sin(\eta)\cos(\phi)\cos(\theta) \\ -\cos(\eta)\cos(\theta) + \sin(\eta)\cos(\phi)\sin(\theta) \\ -\sin(\phi)\sin(\eta) \end{bmatrix}$$

$$W \quad = \quad U \wedge V$$

Avec $\Phi$ l'inclinaison de l'objet 2 par rapport à la direction D, $\theta$ l'azimuth de U, et $\eta$ un angle de rotation du référentiel solidaire de l'objet 2 par rapport au référentiel R, $\wedge$ l'opérateur produit vectoriel.

Le dispositif 4 est donc configuré pour déterminer l'inclinaison $\Phi$ de l'objet 2 par rapport à la direction D. $\eta$ est un paramètre intermédiaire, utilisé dans la formalisation du problème. Ce dispositif 4 comporte au moins deux accéléromètres selon un exemple, et au moins trois accéléromètres selon l'invention. Ce dispositif ne fait cependant pas appel à un magnétomètre ou à un gyromètre pour déterminer cette inclinaison. Chacun de ces accéléromètres est configuré pour mesurer une accélération selon au moins une direction de mesure. Ces accéléromètres sont :

- liés entre eux par une liaison rigide et répartis sur un cercle ;
- aptes à mesurer le champ de gravité terrestre et pas seulement l'accélération relative de l'objet 2 ;
- placés de façon à ce qu'au moins deux accéléromètres présentent des directions de mesure respectives qui ne sont pas mutuellement colinéaires. Avantageusement, l'angle entre ces directions est au moins égal à 30°, de préférence au moins égal à 45°, et encore plus préférentiellement au moins à 60°. Les coordonnées des directions de mesure ou de sensibilité des accéléromètres sont connues dans le repère U, V, W. Les accéléromètres sont distants pour diminuer les incertitudes de l'estimation des mesures.

Dans cet exemple, le dispositif 4 comporte N accéléromètres $A_1$ à $A_N$, où N est un nombre entier avantageusement supérieur ou égal à trois, quatre ou à sept ou à dix. Ces accéléromètres sont ici mono-axiaux, c'est-à-dire que chaque accéléromètre ne possède qu'une seule direction de mesure. Ces accéléromètres $A_1$ à $A_N$ ont ici une liaison encastrement avec l'objet 2. L'objet 2 forme ici une liaison rigide entre les accéléromètres $A_1$ à $A_N$.

L'invention peut bien entendu également être mise en oeuvre en incluant un ou plusieurs accéléromètres à 2 ou 3 directions de mesure parmi les accéléromètres. De tels accéléromètres seront traités comme plusieurs accéléromètres mono-axiaux parmi les accéléromètres $A_1$ à $A_N$ et ayant chacun une direction de mesure. Dans cette description, on désigne le i-ième accéléromètre par la référence $A_i$ où i est un nombre entier supérieur ou égal à 1 et inférieur ou égal à N. La direction de mesure de ce i-ième accéléromètre mono-axial est notée $v_i$. Dans le cas général, on fera référence à ce i-ième accéléromètre pour désigner des propriétés générales desdits accéléromètres.

Pour simplifier, l'emplacement de chacun de ces accéléromètres est matérialisé par un emplacement ponctuel. Pour simplifier, sur les figures 1 et 4, seuls les accéléromètres $A_1$, $A_2$, $A_j$ et $A_N$ sont illustrés.

L'accélération mesurée par chacun de ces accéléromètres correspond à la projection géométrique du champ de gravité g sur la direction de mesure de cet accéléromètre.

La direction de mesure $v_i$ de n'importe lequel des accéléromètres $A_i$ est déterminée par l'équation suivante, avec des coefficients $a_{i,1}$, $a_{i,2}$ $a_{i,3}$ étant des coefficients connus par hypothèse, invariants au cours du temps du fait de la liaison rigide entre les accéléromètres $A_1$ à $A_N$.

$$v_i = a_{i,1}U + a_{i,2}V + a_{i,3}W$$

Chaque accéléromètre effectue ainsi une mesure $m_i$ suivante, correspondant à la projection du champ de gravité sur sa direction de mesure :

$$m_i = a_{i,1}(U^T g) + a_{i,2}(V^T g) + a_{i,3}(W^T g)$$

Ainsi, $m_i = v_i^T g$, où T désigne la transposition matricielle.

On définit par M le vecteur $[m_1, \dots m_N]^T$ contenant les différentes mesures des accéléromètres.

On introduit une matrice A définie par :

$$A = \begin{bmatrix} a_{1,1} & a_{1,2} & a_{1,3} \\ a_{2,1} & a_{2,2} & a_{2,3} \\ \dots & \dots & \dots \\ a_{N,1} & a_{N,2} & a_{N,3} \end{bmatrix}$$

En notant que $U^T g = \cos(\Phi)$, $V^T g = -\sin(\Phi)\sin(\eta)$ et $W^T g = -\sin(\Phi)\cos(\eta)$, on peut réaliser la concaténation des équations précédentes sous la forme suivante :

$$M = A \begin{bmatrix} \cos(\phi) \\ -\sin(\phi)\sin(\eta) \\ -\sin(\phi)\cos(\eta) \end{bmatrix}$$

On peut donc retrouver les angles $\Phi$ et $\eta$ lorsque la matrice A (dont les coefficients sont connus) est au moins de rang 2, c'est-à-dire lorsqu'au moins deux directions de mesure sont non colinéaires.

La résolution de cette équation matricielle peut être réalisée en minimisant le critère suivant :

$$L(\phi, \eta) = \left\| M - A \begin{bmatrix} \cos(\phi) \\ -\sin(\phi)\sin(\eta) \\ -\sin(\phi)\cos(\eta) \end{bmatrix} \right\|^2$$

$\| \cdot \|$ définissant la norme euclidienne de vecteurs à trois dimensions. Cette résolution reste valable même lorsque l'équation matricielle de M est perturbée par des incertitudes d'amplitudes au moins 10 fois inférieures à l'amplitude du champ de gravité g.

La minimisation de ce critère L permet de maximiser la fonction de vraisemblance du système. La résolution fournit des valeurs $\Phi_0$ et $\eta_0$ minimisant le critère L. Des algorithmes de minimisation sont connus de l'homme du métier.

Un tel procédé de détermination de l'inclinaison permet ainsi d'obtenir une bonne précision dès l'utilisation de deux directions de mesure et cela sans magnétomètre. Une telle inclinaison est obtenue par rapport à l'axe U, dans n'importe quel plan incluant cet axe U. En outre, un tel procédé permet en pratique d'obtenir une bonne précision de détermination de l'inclinaison, dès des faibles valeurs d'inclinaison, ce qui s'avère intéressant pour des applications où l'inclinaison varie dans une plage relativement limitée.

On va maintenant décrire la mise en oeuvre spécifique de l'invention illustrée en référence à la figure 1, et s'avérant particulièrement avantageuse.

Les accéléromètres sont ici positionnés sur un cercle C, passant par chacun des accéléromètres et tel que les directions de mesure des accéléromètres soient contenues dans le plan incluant ce cercle. D'autre part, la normale au plan incluant le cercle C coïncide avec la direction définie par le vecteur U. Par exemple, ces accéléromètres sont des accéléromètres commercialisés par la société « Colibrys » sous la référence commerciale « MS9002 ».

La direction de mesure de l'accéléromètre A1 est choisie colinéaire à l'axe V pour cet exemple. Ici, la direction de mesure $v_i$ du i-ième accéléromètre s'étend radialement depuis le centre du cercle C. Cette direction $v_i$ est ici représentée par un vecteur, dont la direction est une droite passant par l'emplacement ponctuel du i-ième accéléromètre et par le centre du cercle C.

La direction de mesure $v_i$ s'écrit :

$$v_i = \cos(\alpha_i)V + \sin(\alpha_i)W$$

Avec $\alpha_i$ l'angle de positionnement connu de l'accéléromètre $A_i$ par rapport à un accéléromètre de référence ($A_1$ dans cet exemple) autour de l'axe U.

Dans cet exemple, la matrice A s'exprime alors :

$$A = \begin{bmatrix} 0 & \cos(\alpha_1) & \sin(\alpha_1) \\ 0 & \cos(\alpha_2) & \sin(\alpha_2) \\ \cdots & \cdots & \cdots \\ 0 & \cos(\alpha_N) & \sin(\alpha_N) \end{bmatrix}$$

Le vecteur de mesure M s'exprime alors avec l'expression théorique suivante :

$$M = -\sin(\phi) \begin{bmatrix} \sin(\alpha_1 + \eta) \\ \sin(\alpha_2 + \eta) \\ \dots \\ \sin(\alpha_N + \eta) \end{bmatrix}$$

La résolution de cette équation matricielle peut être réalisée en minimisant le critère suivant :

$$L(\phi, \eta) = \left\| M + \sin(\phi) \begin{bmatrix} \sin(\alpha_1 + \eta) \\ \sin(\alpha_2 + \eta) \\ \dots \\ \sin(\alpha_N + \eta) \end{bmatrix} \right\|^2$$

Ici, le signal de mesure $m_i$ est entaché d'un bruit statistique pour chacun des accéléromètres. Le signal de mesure se décompose donc en deux termes et est de la forme suivante : $M = \sin(\Phi).f(\eta)+b$, avec b un vecteur représentatif de l'erreur de mesure du fait des bruits statistiques $b_i$ respectifs des capteurs $A_i$, $\underline{f}(\eta)$ étant un vecteur dont la i-ième composante est égale à $-\sin(\alpha_i+\eta)$.

Dans cet exemple, chaque bruit statistique est un processus statistique gaussien et centré, ce qui correspond à une bonne approximation de la réalité pour un grand nombre d'accéléromètres. La variance de ce bruit statistique, pour le i-ième accéléromètre, est notée $\sigma_i^2$. On définit la matrice de covariance $\underline{\Gamma}$ associée à ce processus statistique.

Les bruits statistiques respectifs des N accéléromètres sont ici statistiquement indépendants. Ainsi, dans cet exemple, cette matrice $\underline{\Gamma}$ est une matrice diagonale et définie positive, dont le i-ième coefficient diagonal est égal à la variance $\sigma_i^2$ du i-ième accéléromètre.

La résolution de l'équation matricielle peut alors être réalisée en minimisant le critère suivant

$$L(\phi, \eta) = \left(\sin(\phi)\underline{f}(\eta) - M\right)^T \times \underline{\Gamma}^{-1} \times \left(\sin(\phi)\underline{f}(\eta) - M\right)$$

Avantageusement, pour réduire l'erreur totale sur l'inclinaison de l'objet 2 provenant du bruit statistique des accéléromètres individuels, ces accéléromètres sont placés sur le cercle C de la manière suivante :

- si les variances respectives des accéléromètres satisfont la condition suivante (dite condition d'optimalité) :

$$\sigma_{\max}^{-2} \le \frac{1}{2} Tr(\underline{\Gamma}^{-1})$$

où $\sigma_{\max}^{-2}$ est l'inverse maximal des inverses $\sigma_j^{-2}$ des variances des accéléromètres, Tr désigne l'opérateur mathématique trace et $\underline{\Gamma}$ est la matrice de covariance, alors les accéléromètres sont placés sur le cercle C de manière à satisfaire les relations suivantes :

$$\sum_{i=1}^{N} \sigma_j^{-2} \sin(2\alpha_j) = 0$$

et

$$\sum_{j=1}^{N} \sigma_j^{-2} \cos\left(2\alpha_j\right) = 0$$

- si les variances respectives des accéléromètres ne satisfont pas la condition d'optimalité, alors l'accéléromètre présentant la variance d'inverse maximale $\sigma_{max}^{-2}$ est placé à un emplacement quelconque sur le cercle C et tous les autres accéléromètres sont placés, sur ce cercle C, à un angle de 90° de cet accéléromètre.

Le dispositif 4 comporte en outre un dispositif de calcul 10, configuré pour calculer automatiquement l'inclinaison de l'objet 2. La figure 2 représente schématiquement ce dispositif 10. Ce dispositif 10 comporte :

- un support d'enregistrement 12 d'informations,
- un calculateur 14 électronique programmable,
- une interface 16 d'échange de données.

Le calculateur 14 est notamment programmé pour exécuter des informations contenues sur le support 12. Le support 12 contient des instructions pour l'exécution du procédé de la figure 3. L'interface 16 permet notamment l'acquisition, par le calculateur 14, des valeurs de mesures m(j) fournies par les accéléromètres du dispositif 4. Par exemple, l'interface 16 comporte un bus de données, tel qu'un bus série (pour « Sériai Peripheral Interface » en langue anglaise), relié électriquement aux accéléromètres $A_1$ à AN.

Un exemple d'utilisation de l'objet 2 va maintenant être décrit en détail, en référence à l'organigramme de la figure 3 et à l'aide de la figure 4.

Les informations de la matrice A concernant les accéléromètres sont définies au préalables, de même que les propriétés de bruit statistique des accéléromètres.

A un instant t, l'objet 2 est à une position initiale à une inclinaison donnée. Puis, lors d'une étape 22, l'objet 2 subit un déplacement de sa position initiale vers une position dans laquelle l'objet 2 présente une nouvelle inclinaison par rapport à la direction de référence D. Par exemple, l'objet 2 subit une rotation par rapport au repère R. Ici, à l'issue de cette rotation, l'objet 2 présente un angle d'inclinaison, noté $\Phi$, non nul, par rapport à la direction D (Figure 4).

Lors d'une étape 24, les accélérations subies par les accéléromètres sont mesurées. Chaque accéléromètre fournit une mesure $m_i$ d'accélération.

Lors de la mesure, l'objet 2 est dans un état quasi-statique, puisque la détermination de l'inclinaison utilise une résolution basée sur les mesures du champ de gravité g par les différents accéléromètres. On peut considérer que l'objet est dans un état quasi-statique lorsque l'accélération propre (c'est-à-dire correspondant au mouvement de l'objet) maximale de l'objet 2 par rapport au repère R est au moins dix fois ou vingt fois ou cinquante fois inférieure à l'amplitude de la gravité g. Ainsi, la mesure est adaptée pour un objet 2 dont les conditions normales d'utilisation sont de type quasi-statique.

Lors d'une étape 26, l'inclinaison de l'objet est déterminée automatiquement à partir des mesures $m_i$. Durant cette étape, une opération 32 inclut la résolution de l'équation du type

$$M = A \begin{bmatrix} \cos(\phi) \\ -\sin(\phi)\sin(\eta) \\ -\sin(\phi)\cos(\eta) \end{bmatrix}$$

cette résolution comprenant la minimisation d'un critère L($\Phi$, $\eta$) défini par l'équation:

$$L(\theta, \eta) = \left(\sin(\phi)\underline{f}(\eta) - M\right)^T \times \underline{\Gamma}^{-1} \times \left(\sin(\phi)\underline{f}(\eta) - M\right)$$

De nombreux autres modes de réalisation sont possibles.

L'objet 2 peut présenter une forme différente. L'inclinaison de l'objet 2 peut être définie autrement que par rapport à l'axe U.

Les accéléromètres ne sont pas forcément tous mono-axiaux. Par exemple, les accéléromètres sont des accéléromètres tri-axiaux, tels ceux commercialisés par la société « STMicroelectronics » sous la référence commerciale « LSM303DLH ».

Des étapes du procédé de la figure 3 peuvent être exécutées dans un ordre différent et/ou peuvent être simultanées.

Lors de l'étape 20, l'objet 2 n'est pas forcément placé dans un état initial présentant une inclinaison nulle, mais peut présenter une inclinaison non nulle. Le déplacement (étape 22) de l'objet 2 et la mesure des accélérations (étape 24) peuvent être concomitants, à condition que l'objet 2 reste quasi-statique pendant son déplacement.

On peut combiner au moins deux objets 2 pour déterminer des propriétés de déformation d'une structure déformable, telles que la courbure.

La figure 5 représente à cet effet une portion d'une structure déformable 40 sur laquelle sont placés des objets instrumentés 42 et 44, par exemple identiques à l'objet 2. Des propriétés de déformation de la structure 40 peuvent ainsi être indirectement calculées à partir de l'inclinaison de chacun des objets 42 et 44.

Dans cet exemple, la structure 40 est déformable par flexion. Les objets 42 et 44 sont ici maintenus solidaires de la structure 40 par une liaison encastrement. Ces objets 42 et 44 sont par exemple connectés, par un bus de données, à une unité de calcul configurée pour déterminer la courbure d'une direction médiane 46 de la structure 40, à partir des inclinaisons mesurées par chacun des objets 42 et 44. Pour simplifier, ce bus de données et cette unité de calcul ne sont pas illustrés sur la figure 5. L'inclinaison de ces objets 42 et 44 est ici définie par rapport à la direction du champ de gravité g, ici verticale.

Cette unité de calcul est notamment programmée pour :

- évaluer l'inclinaison en tout point de la structure 40, à partir des mesures fournies par les objets 42 et 44, par exemple, au moyen de méthodes d'interpolation telles que l'interpolation par splines cubiques ;
- calculer, à partir de la connaissance de cette inclinaison en tout point de la structure 40, la courbure k en tout point de la direction 46 de la structure 40, par exemple au moyen de la formule suivante (en supposant que la direction médiane de la structure n'est pas gauche) :

$$k(S) = \frac{d\phi(s)}{ds}$$

où k(S) est la courbure de la direction 46 au point S d'abscisse curviligne s (l'origine des abscisses curvilignes étant fixée arbitrairement, $\Phi(s)$ étant l'inclinaison de la structure 40 au point S d'abscisse curviligne s.

Ces exemples de méthodes d'interpolation et de reconstruction sont par exemple décrits dans le chapitre 1 de la thèse de doctorat de N. Sprynski, « Reconstruction de courbes et surfaces à partir de données tangentielles », Université Joseph Fourier, Grenoble, France, 2007.

Lorsque plusieurs objets 42, 44 sont utilisés conjointement sur une même structure 20 pour déterminer des propriétés de cette structure 40, alors le dispositif de calcul 10 peut présenter une forme différente. Par exemple, ce dispositif 10 n'est pas forcément incorporé dans chacun des objets 42, 44. Un unique dispositif 10 peut alors être placé à l'extérieur de ces objets 42, 44, dans une unité de traitement de données configurée pour recevoir les données de mesure des accéléromètres des objets 42 et 44.

Le procédé de détermination d'inclinaison ou de courbure peut être appliqué à une poutre, par exemple dans le domaine de la construction. Un tel procédé peut par exemple être utilisé pour déterminer l'évolution du module d'élasticité d'une poutre dans le temps, en fonction de l'inclinaison ou de la courbure déterminés. Le procédé de détermination d'inclinaison peut également être appliqué à des câbles de traction, par exemple des câbles de ponts.

## Revendications

**1.** Procédé de détermination de l'inclinaison d'un objet (2) dans un repère de référence fixe (X, Y, Z) par rapport à la direction du champ de gravité terrestre, **caractérisé en ce que** ce procédé comporte :

- la fourniture de plusieurs accéléromètres ($A_1,...A_N$) au moins au nombre de trois et reliés de façon rigide par l'objet et répartis sur un cercle (C), chacun de ces accéléromètres étant apte à mesurer une accélération selon une direction de mesure (vj), les directions de mesure respectives d'au moins deux desdits accéléromètres étant non colinéaires, la direction de mesure de chacun desdits accéléromètres étant définie par le rayon reliant cet accéléromètre au centre du cercle ;
- la mesure, par lesdits accéléromètres, des composantes du champ de gravité terrestre le long desdites directions de mesure, cette mesure fournissant, pour chacune desdites directions, une valeur de mesure, notée $m_i$ pour une direction de mesure d'indice i ;
- la résolution de l'équation matricielle suivante pour déterminer l'inclinaison $\Phi$ de l'objet (2) par rapport au repère de référence :

$$M = A \begin{bmatrix} \cos(\phi) \\ -\sin(\phi)\sin(\eta) \\ -\sin(\phi)\cos(\eta) \end{bmatrix}$$

avec M le vecteur dont la i-ième composante est définie par la mesure $m_i$, pour les directions de mesure définies pour chacun desdits accéléromètres par le rayon reliant cet accéléromètre au centre du cercle, A une matrice définie par les directions de mesure des accéléromètres dans un référentiel solidaire de l'objet, et $\eta$ un angle de rotation de ce référentiel solidaire par rapport au référentiel fixe, lesdits accéléromètres présentant un bruit statistique de mesure gaussien et centré, la résolution comprenant la minimisation d'un critère $L(\Phi, \eta)$ défini par l'équation suivante :

$$L(\phi,\eta) = \left(\sin(\phi)\underline{f}(\eta) - M\right)^T \times \underline{\Gamma}^{-1} \times \left(\sin(\phi)\underline{f}(\eta) - M\right)$$

avec $\underline{f}(\eta)$ un vecteur dont la i-ième composante est égale à $-\sin(\alpha_i+\eta)$, avec $\alpha_i$ l'angle de positionnement, autour d'un axe normal audit cercle et passant par son centre, de l'accéléromètre d'indice i par rapport à un desdits accéléromètres pris comme référence, et avec $\underline{\Gamma}$ une matrice de covariance correspondant aux bruits statistiques de mesure des accéléromètres pour lesdites directions de mesure.

2. Procédé selon la revendication 1, dans lequel lesdits accéléromètres sont répartis de façon uniforme sur ledit cercle.

3. Procédé selon la revendication 2, dans lequel lesdits accéléromètres sont au moins au nombre de quatre.

4. Procédé selon l'une quelconque des revendications précédentes, dans lequel les bruits statistiques des accéléromètres ($A_1$, ... $A_N$) sont statistiquement indépendants, et dans lequel la matrice de covariance $\underline{\Gamma}$ est une matrice diagonale et définie positive dont le i-ième coefficient est égal à la variance $\sigma_i^2$ pour la i-ième direction de mesure.

5. Procédé selon l'une quelconque des revendications précédentes, dans lequel lesdites étapes de mesure sont effectuées sur un objet présentant une accélération propre par rapport au repère de référence au moins dix fois inférieure à l'amplitude du champ de gravité g, de préférence au moins vingt fois inférieure à l'amplitude du champ de gravité g.

6. Procédé de détermination de la courbure d'une structure (40), le procédé comprenant :

   - la fourniture de premiers accéléromètres reliés par un premier objet rigide (42) ;
   - la fourniture de seconds accéléromètres reliés par un second objet rigide (44) fixé à un deuxième emplacement de la structure ;
   - la détermination des inclinaisons respectives des premier et deuxième objets par un procédé selon l'une quelconque des revendications précédentes ;
   - le calcul de la courbure de la structure à partir des première et deuxième inclinaisons déterminées.

7. Objet instrumenté comportant un dispositif pour déterminer automatiquement l'inclinaison de cet objet dans un repère de référence fixe par rapport à la direction du champ de gravité terrestre, **caractérisé en ce que** ce dispositif comporte :

   - au moins trois accéléromètres reliés de façon rigide par l'objet et répartis sur un cercle (C), chacun de ces accéléromètres étant apte à mesurer une composante du champ de gravité terrestre selon une direction de mesure pour fournir une valeur de mesure notée $m_i$ pour une direction de mesure d'indice i, les directions de mesure respectives d'au moins deux desdits accéléromètres étant non colinéaires, la direction de mesure de chacun desdits accéléromètres étant définie par le rayon reliant cet accéléromètre au centre du cercle ;
   - un dispositif de calcul programmé pour déterminer l'inclinaison $\Phi$ de l'objet par rapport au repère de référence par résolution de l'équation matricielle suivante :

$$M = A \begin{bmatrix} \cos(\phi) \\ -\sin(\phi)\sin(\eta) \\ -\sin(\phi)\cos(\eta) \end{bmatrix}$$

avec M le vecteur dont la i-ième composante est définie par la mesure $m_i$, pour les directions de mesure définies pour chacun desdits accéléromètres par le rayon reliant cet accéléromètre au centre du cercle, A une matrice définie par les directions de mesure des accéléromètres dans un référentiel solidaire de l'objet, et $\eta$ un angle de rotation de ce référentiel solidaire par rapport au référentiel fixe, lesdits accéléromètres présentant un bruit statistique de mesure gaussien et centré, ledit dispositif de calcul étant programmé pour résoudre ladite équation matricielle par la minimisation d'un critère $L(\Phi, \eta)$ défini par l'équation suivante :

$$L(\phi,\eta) = \left(\sin(\phi)\underline{f}(\eta) - M\right)^T \times \underline{\Gamma}^{-1} \times \left(\sin(\phi)\underline{f}(\eta) - M\right)$$

avec $f(\eta)$ un vecteur dont la i-ième composante est égale à $-\sin(\alpha_i+\eta)$, avec $\alpha_i$ l'angle de positionnement, autour d'un axe normal audit cercle et passant par son centre, de l'accéléromètre d'indice i par rapport à un desdits accéléromètres pris comme référence, et avec $\Gamma$ une matrice de covariance correspondant aux bruits statistiques de mesure des accéléromètres pour lesdites directions de mesure.

## Patentansprüche

1. Verfahren zur Bestimmung der Neigung eines Objekts (2) in einem fixen Bezugssystem (X, Y, Z) in Bezug zur Richtung des Erdgravitationsfeldes, **dadurch gekennzeichnet, dass** dieses Verfahren umfasst:

   - die Bereitstellung von mehreren Beschleunigungsmessern ($A_1$, ... $A_N$), mindestens in der Anzahl von drei, die starr mit dem Objekt verbunden und auf einem Kreis (C) verteilt sind, wobei jeder dieser Beschleunigungsmesser geeignet ist, eine Beschleunigung in eine Messrichtung (vj) zu messen, wobei die jeweiligen Messrichtungen mindestens zweier der Beschleunigungsmesser nicht kolinear sind, wobei die Messrichtung jedes der Beschleunigungsmesser durch den Radius, der diesen Beschleunigungsmesser mit dem Mittelpunkt des Kreises verbindet, definiert ist;
   - das Messen, durch die Beschleunigungsmesser, der Komponenten des Erdgravitationsfeldes entlang der Messrichtungen, wobei dieses Messen für jede der Richtungen einen mit $m_i$ bezeichneten Messwert für eine Messrichtung mit dem Index i liefert;
   - die Lösung der folgenden Matrixgleichung, um die Neigung $\Phi$ des Objekts (2) in Bezug zum Bezugssystem zu bestimmen:

$$M = A \begin{bmatrix} \cos(\phi) \\ -\sin(\phi)\sin(\eta) \\ -\sin(\phi)\cos(\eta) \end{bmatrix}$$

wobei M der Vektor ist, dessen i-te Komponente durch das Messen $m_i$ definiert wird, für die Messrichtungen, die für jeden der Beschleunigungsmesser durch den Radius, der diesen Beschleunigungsmesser mit dem Mittelpunkt des Kreises verbindet, definiert sind, wobei A eine Matrix ist, die durch die Messrichtungen der Beschleunigungsmesser in einem mit dem Objekt verbundenen Bezugssystem definiert ist, und wobei $\eta$ ein Drehwinkel dieses solidarischen Bezugssystems in Bezug zum festen Bezugssystem ist, wobei die Beschleunigungsmesser ein Gaußsches und zentriertes statistisches Messrauschen aufweisen, wobei die Lösung die Minimierung eines Kriteriums $L(\Phi,\eta)$ umfasst, das durch die folgende Gleichung definiert ist:

$$L(\phi,\eta) = \left(\sin(\phi)\underline{f}(\eta) - M\right)^T \times \underline{\Gamma}^{-1} \times \left(\sin(\phi)\underline{f}(\eta) - M\right)$$

wobei $\underline{f}(\eta)$ ein Vektor ist, dessen i-te Komponente gleich $-\sin(\alpha_i+\eta)$ ist, wobei $\alpha_i$ der Positionierungswinkel um eine Achse, normal auf den Kreis und durch seinen Mittelpunkt verlaufend, des Beschleunigungsmessers mit dem Index i in Bezug zu einem der als Referenz herangezogenen Beschleunigungsmessern ist, und wobei $\underline{\Gamma}$ eine Kovarianzmatrix entsprechend dem statistischen Messrauschen der Beschleunigungsmesser für die Messrichtungen ist.

2. Verfahren nach Anspruch 1, bei dem die Beschleunigungsmesser einheitlich auf dem Kreis verteilt sind.

3. Verfahren nach Anspruch 2, bei dem die Beschleunigungsmesser mindestens in der Anzahl von vier vorhanden sind.

4. Verfahren nach einem der vorhergehenden Ansprüche, bei dem das statistische Rauschen der Beschleunigungsmesser ($A_1, ... A_N$) statistisch unabhängig ist, und bei dem die Kovarianzmatrix $\underline{\Gamma}$ eine diagonale und positiv definierte Matrix ist, deren i-ter Koeffizient gleich der Varianz $\sigma^2_i$ für die i-te Messrichtung ist.

5. Verfahren nach einem der vorhergehenden Ansprüche, bei dem die Schritte des Messens an einem Objekt durchgeführt werden, das eine eigene Beschleunigung in Bezug zum Bezugssystem aufweist, die mindestens zehnmal geringer als die Amplitude des Gravitationsfeldes g ist, vorzugsweise mindestens zwanzigmal geringer als die Amplitude des Gravitationsfeldes g.

6. Verfahren zur Bestimmung der Krümmung einer Struktur (40), wobei das Verfahren umfasst:

   - die Bereitstellung von ersten Beschleunigungsmessern, die durch ein erstes starres Objekt (42) verbunden sind;
   - die Bereitstellung von zweiten Beschleunigungsmessern, die durch ein zweites starres Objekt (44), das an einer zweiten Stelle der Struktur befestigt ist, verbunden sind;
   - die Bestimmung der jeweiligen Neigungen der ersten und zweiten Objekte durch ein Verfahren nach einem der vorhergehenden Ansprüche;
   - die Berechnung der Krümmung der Struktur auf Basis der ersten und zweiten bestimmten Neigungen.

7. Instrumentiertes Objekt, umfassend eine Vorrichtung, um automatisch die Neigung dieses Objekts in einem festen Bezugssystem in Bezug zur Richtung des Erdgravitationsfeldes zu bestimmen, **dadurch gekennzeichnet, dass** diese Vorrichtung umfasst:

   - mindestens drei Beschleunigungsmessern, die starr mit dem Objekt verbunden und auf einem Kreis (C) verteilt sind, wobei jeder dieser Beschleunigungsmesser geeignet ist, eine Komponente des Erdgravitationsfeldes in eine Messrichtung zu messen, um einen mit $m_i$ bezeichneten Messwert für eine Messrichtung mit dem Index i zu liefern, wobei die jeweiligen Messrichtungen mindestens zweier der Beschleunigungsmesser nicht kolinear sind, wobei die Messrichtung jedes der Beschleunigungsmesser durch den Radius, der diesen Beschleunigungsmesser mit dem Mittelpunkt des Kreises verbindet, definiert ist;
   - eine Berechnungsvorrichtung, die programmiert ist, um die Neigung $\Phi$ des Objekts in Bezug zum Bezugssystem durch Lösung der folgenden Matrixgleichung zu bestimmen:

$$M = A \begin{bmatrix} \cos(\phi) \\ -\sin(\phi)\sin(\eta) \\ -\sin(\phi)\cos(\eta) \end{bmatrix}$$

wobei M der Vektor ist, dessen i-te Komponente durch das Messen $m_i$ definiert wird, für die Messrichtungen, die für jeden der Beschleunigungsmesser durch den Radius, der diesen Beschleunigungsmesser mit dem Mittelpunkt des Kreises verbindet, definiert sind, wobei A eine Matrix ist, die durch die Messrichtungen der Beschleunigungsmesser in einem mit dem Objekt verbundenen Bezugssystem definiert ist, und wobei $\eta$ ein Drehwinkel dieses solidarischen Bezugssystems in Bezug zum festen Bezugssystem ist, wobei die Beschleunigungsmesser ein Gaußsches und zentriertes statistisches Messrauschen aufweisen, wobei die Lösung die Minimierung eines Kriteriums $L(\Phi,\eta)$ umfasst, das durch die folgende Gleichung definiert ist:

$$L(\phi, \eta) = \left(\sin(\phi)\underline{f}(\eta) - M\right)^{T} \times \underline{\Gamma}^{-1} \times \left(\sin(\phi)\underline{f}(\eta) - M\right)$$

wobei $\underline{f}(\eta)$ ein Vektor ist, dessen i-te Komponente gleich -sin($\alpha_i$+$\eta$) ist, wobei $\alpha_i$ der Positionierungswinkel um eine Achse, normal auf den Kreis und durch seinen Mittelpunkt verlaufend, des Beschleunigungsmessers mit dem Index i in Bezug zu einem der als Referenz herangezogenen Beschleunigungsmessern ist, und wobei $\underline{\Gamma}$ eine Kovarianzmatrix entsprechend dem statistischen Messrauschen der Beschleunigungsmesser für die Messrichtungen ist.

**Claims**

1. Method for determining the inclination of an object (2) in a fixed frame of reference (X, Y, Z) relative to the direction of the Earth's gravity field, **characterized in that** the method comprises:

   - the supply of a plurality of accelerometers (A1,...AN) numbering at least three, rigidly linked by the object and distributed over a circle (C), each of these accelerometers being suitable for measuring an acceleration in a measurement direction (vj), the respective measurement directions of at least two of said accelerometers being non-colinear, the measurement direction of each of said accelerometers being defined by the radius linking this accelerometer to the centre of the circle;
   - the measurement, by said accelerometers, of the components of the Earth's gravity field along said measurement directions, this measurement providing, for each of said directions, a measurement value, denoted $m_j$ for a measurement direction of index i;
   - the resolution of the following matrix equation to determine the inclination $\Phi$ of the object (2) relative to the frame of reference:

   $$M = A \begin{bmatrix} \cos(\phi) \\ -\sin(\phi)\sin(\eta) \\ -\sin(\phi)\cos(\eta) \end{bmatrix}$$

   with M being the vector whose ith component is defined by the measurement $m_j$, for the measurement directions defined for each of said accelerometers by the radius linking this accelerometer to the centre of the circle, A being a matrix defined by the measurement directions of the accelerometers in a frame of reference attached to the object, and $\eta$ being an angle of rotation of this attached frame of reference relative to the fixed frame of reference, said accelerometers exhibiting a Gaussian and centred measurement statistical noise, the resolution comprising the minimization of a criterion L($\Phi$, $\eta$) defined by the following equation:

   $$L(\theta, \eta) = \left(\sin(\phi)\underline{f}(\eta) - M\right)^{T} \times \underline{\Gamma}^{-1} \times \left(\sin(\phi)\underline{f}(\eta) - M\right)$$

   with $\underline{f}(\eta)$ being a vector whose ith component is equal to -sin($\alpha_i$+$\eta$), with $\alpha_i$ being the positioning angle, about an axis normal to said circle and passing through its centre, of the accelerometer of index i relative to one of said accelerometers taken as a reference, and with $\underline{\Gamma}$ being a covariance matrix corresponding to the measurement statistical noises of the accelerometers for said measurement directions.

2. Method according to Claim 1, in which said accelerometers are distributed uniformly over said circle.

3. Method according to Claim 2, in which said accelerometers number at least four.

4. Method according to any one of the preceding claims, in which the statistical noises of the accelerometers ($A_1$, ... $A_N$) are statistically independent, and in which the covariance matrix $\underline{\Gamma}$ is a positive diagonal and defined matrix whose ith coefficient is equal to the variance $\sigma_i^2$ for the ith measurement direction.

5. Method according to any one of the preceding claims, in which said measurement steps are performed on an object exhibiting a specific acceleration relative to the frame of reference at least ten times less than the amplitude of the gravity field g, preferably at least twenty times less than the amplitude of the gravity field g.

6. Method for determining the curvature of a structure (40), the method comprising:

- the supply of first accelerometers linked by a first rigid object (42);
- the supply of second accelerometers linked by a second rigid object (44) fixed to a second place of the structure;
- the determination of the respective inclinations of the first and second objects by a method according to any one of the preceding claims;
- the calculation of the curvature of the structure from the determined first and second inclinations.

7. Instrumented object comprising a device for automatically determining the inclination of this object in a fixed frame of reference relative to the direction of the Earth's gravity field, **characterized in that** this device comprises:

- at least three accelerometers linked rigidly by the object and distributed over a circle (C), each of these accelerometers being suitable for measuring a component of the Earth's gravity field in a measurement direction to supply a measurement value denoted $m_j$ for a measurement direction of index i, the respective measurement directions of at least two of said accelerometers being non-colinear, the measurement direction of each of said accelerometers being defined by the radius linking this accelerometer to the centre of the circle;
- a programmed computation device for determining the inclination $\Phi$ of the object relative to the frame of reference by the resolution of the following matrix equation:

$$
M = A \begin{bmatrix} \cos(\phi) \\ -\sin(\phi)\sin(\eta) \\ -\sin(\phi)\cos(\eta) \end{bmatrix}
$$

with M being the vector whose ith component is defined by the measurement $m_j$, for the measurement directions defined for each of said accelerometers by the radius linking this accelerometer to the centre of the circle, A being a matrix defined by the measurement directions of the accelerometers in a frame of reference attached to the object, and $\eta$ being an angle of rotation of this attached frame of reference relative to the fixed frame of reference, said accelerometers exhibiting a Gaussian and centred measurement statistical noise, said computation device being programmed to resolve said matrix equation by the minimization of a criterion $L(\Phi, \eta)$ defined by the following equation:

$$
L(\theta,\eta) = \left(\sin(\phi)\underline{f}(\eta) - M\right)^{T} \times \underline{\underline{\Gamma}}^{-1} \times \left(\sin(\phi)\underline{f}(\eta) - M\right)
$$

with f($\eta$) being a vector whose ith component is equal to -sin($\alpha$i+$\eta$), with $\alpha$i being the positioning angle, about an axis normal to said circle and passing through its centre, of the accelerometer of index i relative to one of said accelerometers taken as a reference, and with $\Gamma$ being a covariance matrix corresponding to the measurement statistical noises of the accelerometers for said measurement directions.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2007062496 A1
- EP 2492417 A1
- EP 1115350 A2
- EP 2077432 A1

### Littérature non-brevet citée dans la description

- **K. PARSA et al.** Attitude calibration of an accelerometer array. *Proceedings of the 2002 IEEE International Conférence on Robotics & Automation,* Mai 2002, 129-134
- Reconstruction de courbes et surfaces à partir de données tangentielles. **N. SPRYNSKI.** thèse de doctorat. Université Joseph Fourier, 2007